Europäisches Patentamt

European Patent Office

Office européen des brevets

(11) Publication number: **0 194 021**
**A1**

# EUROPEAN PATENT APPLICATION

(21) Application number: **86300634.2**

(22) Date of filing: **30.01.86**

(51) Int. Cl.⁴: **G 03 B 17/56**
**// B25J18/06**

(30) Priority: **01.02.85 GB 8502638**

(43) Date of publication of application: **10.09.86**
**Bulletin 86/37**

(84) Designated Contracting States: **DE FR GB IT NL**

(71) Applicant: **SAMUELSON GROUP PLC,**
**303-315 Cricklewood Broadway, London NW2 6PQ (GB)**

(72) Inventor: **Determann, Christoph, 43B Rathcoole**
**Gardens, Crouch End London N8 (GB)**

(74) Representative: **Ashmead, Richard John et al, KILBURN**
**& STRODE 30 John Street, London, WC1N 2DD (GB)**

(54) **Articulated support frame.**

(57) A support frame, for example an articulated camera support, is disclosed having support arms articulated to one another by an intermediate member and racked to one another by meshed gear teeth, each arm having gear teeth disposed such that they mesh with the teeth on an adjacent arm with the support arm axes (as herein defined) of the adjacent arms co-planar, e.g. with the teeth disposed such that its support arm axis (as herein defined) intersects the gear pitch circle diameter at a point of substantial symmetry of a gear tooth flank.

1.

ARTICULATED SUPPORT FRAME

This invention relates to articulated support frames more particularly but not exclusively for use as a support frame for a camera or like cinematographic equipment.

Cinematographic cameras are normally supported for use on a support or dolly which may be moved from place to place on built-in castors or wheels and on which the camera height and attitude may be altered to a degree respectively by a sliding pillar support arrangement and means for articulation of the mount at the top of the support. While such an arrangement is suitable for a large range of filming requirements there are a number of locations and shots which require positioning of the camera which the conventional support or dolly cannot provide. For example it may on occasions be necessary to locate the camera over a void, or at least at a position laterally spaced from the support column, or at a height from the floor less or more than can be accommodated by the range of movement of the support column.

With a certain degree of improvisation these less usual requirements can be met for example by assembly of a rigid framework which can itself be locked to head of the dolly support column and the camera located on the framework away from the support axis, either on top of or below the framework so that the camera is in effect supported by the framework acting as a canti lever. Balance weights will be required in most instances if no other form of securement is available.

2. 0194021

The way in which such fixed frameworks may be used is in itself limited, particularly by the limit of the articulation permitted by the support dolly head and lack of adjustability of the lateral positioning of the camera. Moreover inversion of the camera, although perhaps not required that frequently, requires disassembly of the entire arrangement and re-assembly in the inverted form, a time consuming matter.

It is an object of the present invention to produce a support framework, more particularly but not exclusively for a camera or the like cinematographic equipment,which provides a very considerably increased degree of variability of camera postioning when usede.g. with an otherwise conventional support dolly. It is expected moreover that other benefits will be obtained for example enhanced rigidity of support and reduction of set-up time between shots where a change of camera positioning or attitude is required.

According to one aspect of the present invention a support frame comprises support arms articulated to one another by an intermediate member and racked to one another by meshed gear teeth, each arm having gear teeth disposed such that they mesh with the teeth on an adjacent arm with the support arm axes (as herein defined) of the adjacent arms co-planar.

In a further aspect of the invention a support frame comprises support arms articulated to one another by an intermediate member and racked to one another by meshed gear teeth, each arm having gear teeth disposed such that the support arm axis (as herein defined) intersects the gear pitch circle diameter at a point of substantial symmetry of a tooth flank.

In a preferred form of the invention the support frame comprises a plurality of support arms thus articulated to one another in line. Each support arm preferably has two substantially parallel longitudinal elements rigidly connected to one another by cross members. The said gear teeth are located at one or both ends of the longitudinal elements, either being formed integrally with the longitudinal elements or being affixed permanently to the longitudinal elements by suitable means. The gear teeth in each case are arranged about the periphery of an appropriate sector of a circle centred on the pivot point of articulation of the support arm to the adjacent intermediate member. The appropriate sector is preferably in the region of 180° although it may be more or less as required in the particular circumstances.

Thus in a preferred form of the invention two support arms each comprising two of the said longitudinal elements are arranged end to end. The inner ends of the longitudinal elements, those adjacent the other support arm, each have the required sector of gear teeth, the said gear teeth of each longitudinally aligned pair of longitudinal elements being meshed together. The intermediate member in the form of a link plate is then affixed to either side of the junction of the two support arms with means, for example, pivot bolts to fix the link plate to the support arms. In that position the support arms may be moved angularly with respect to one another as far as is permitted by the said gears. In a preferred form of the invention the gear sector covered in each case and the length of the link member in relation to the support arms is such that the support arms may be folded back on to one another so that they are parallel rather than co-planar.

The support frame may preferably comprise more than two support arms. The distal end of a support arm not connected to an adjacent support arm need not bear the gear teeth but may be provided as required by other means, for example, for location of balance weights.

In a further preferred form of the invention means are provided to lock adjacent support arms with respect to one another. This is preferably achieved by use of a pair of plates splined on their facing surfaces and movable axially in relation to one another so that they lock with respect to one another when together and may rotate freely with respect to one another when they are spaced apart. One splined plate may be fixed to rotate with a support arm and the other with the adjacent intermediate member about the gear/pivot axis. Means are provided to bring these two splined plates together when the arm is in the desired position such that the arm can be locked in that position. With the support framework comprising double longitudinal elements as described above

5.                                        0194021

e.g. only a single pair of splined plates may be
disposed between each pair of adjacent support arms.
For greater reliability and rigidity a plurality of
spline plate pairs may be used.  Where a plurality of
spline  plate  pairs  are  used they are preferably
arranged such that they may be engaged and disengaged
by a single lever or key for speed and ease of operation.

Thus according to a further aspect of the invention
support frame comprises support arms articulated to
one another by an intermediate member and racked to
one another by meshed gear teeth, splined locking
plates being disposed between at least one of the
support arms and the said intermediate member and
means being provided releasably to lock said support
arm and said intermediate member to one another by
means of engagement of the splined plates.

In this embodiment of the invention the splined
plates each may be affixed either to a support arm
or to the intermediate member by whatever means are
appropriate.  For example pins standing proud of the
lateral surfaces of the support arm and the intermediate
plate may be provided with pins engaging with recesses
or holes in the splined plates.  The positioning of the
splines of the plates and of the fixing means (e.g.
said pins and recesses) is required to be such as
to permit locking of adjacent support arms at the
required angular disposition to one another e.g.
with  support arm axes co-planar.  The disposition of
splines, which splines are preferably radial, is
preferably at $7\frac{1}{2}°$ intervals throughout the full 360°
of the splined plates.

In a preferred form of this embodiment of the invention four pairs of spline plates are provided at each joint between support arms, one at the end of each of the longitudinal elements of the support arm adjacent the gears thereof. Where a pivot bar linkage is provided between the support arms and the intermediate member, the pivot bars are preferably affixed to the frame in a manner which enables them to be placed under tension to bring the respective pairs of splined plates into engagement. Appropriate spring means are preferably provided to take the respective pairs of spline plates out of engagement when the tension is released. Means are preferably provided such that each of a plurality of splined plates used may be operated simultaneously by a single manual action.

The disposition of the splines on each pair of spline plates in relation to the support arms and the intermediate member, and the disposition of gear teeth are such that adjacent support arms may repeatedly and reliably be returned to a position where their support arm axes (as herein defined) are co-planar.

7.

0194021

Each support arm is preferably provided with longitudinal sliders or tracks on which a camera or the like may be mounted, moved and re-mounted. The sliders or tracks are preferably on the upper and lower faces of the longitudinal elements. Indeed the longitudinal elements may be in the form of channels facing one another and arranged such that the free edges of the channel disposed longitudinally function as the slider or track.

The support arms of the invention are preferably substantially linear in the longitudinal direction. With such linearity a line passing through the gear centres of gears at opposite distal ends of the support arms is defined to be the support arm axis. When only one gear is provided at one end the said support arm axis will be a line passing through the centre of the gear teeth at one end, along the longitudinal element of the arm and substantially horizontal when in a normal position for mounting a camera thereon which is in itself set up for a horizontal shot.

A primary object of the invention is as stated above to provide adjustability of positioning of a camera on a support frame mounted on an otherwise conventional support dolly. If one element of a multiple support arm frame is affixed in the normal horizontal position to a conventional camera dolly it will be seen that the remaining arms, if maintained with their support arm axes co-planar will extend laterally of the dolly in the manner of a cantilever.

When the adjacent support arms are not locked to one another they can be moved angularly with respect to the adjacent arm if required with the camera still in position on one of the distal support arms. The racking of the support arms one to another with gear teeth means that the full load carrying capacity of the support frame can be borne at any angular relationship of any of its articulations, any particular setting being reliably reproduceable. The use of the splined locking arrangement is particularly beneficial in this regard as the pitch of the splines can be used as a means of calibration of angularity in articulations.

It is important that the support frame can quickly be returned to a datum disposition e.g. horizontal/planar It is therefore important that the adjacent arms have gear teeth which mesh e.g. when their support arm axes are co-planar. If for example the support arm axis of one support arm passes symmetrically through a gear tooth, the gear teeth on the adjacent arm will have to be arranged such that the pivot arm axis of that arm passes symmetrically through the trough between two gear teeth. That in itself is of course feasible but in one of the aspects of the present invention, that requiring the support arm axis of an arm to intersect the gear pitch circled diameter at a point of substantial symmetry of a tooth flank, much

0194021

simpler and more economical manufacturing is achieved. With this arrangement each arm may be provided with an identical gear set and full meshing of a adjacent gear teeth achieved with the respective support arm axes co-planar simply by inversion of one support arm with respect to the other.

The disposition of the gear teeth in the above defined second aspect of the invention, namely that the support arm axis intersects the gear pitch circle diameter at a point of substantial symmetry of a tooth flank, can be expressed in a different way. In that form of the invention it is accordingly the case that each set of gear teeth is located in relation to its support arm in a manner substantially identical to the location of other gear teeth on arms for use to construct the said support frame, inversion of one support arm and meshing its teeth with those of an adjacent support arm resulting in a line through the gear axes of two enmeshed gears intersecting the gear pitch circled diameter of each gear at a point of substantial symmetry of a tooth flank.

The invention in further aspects may comprise any of the above described features either alone or in combination.

In a particularly preferred aspect of the invention a support frame according to any of the above defined aspects is an articulated camera support, each of the support arms comprising two substantially parallel longitudinal elements rigidly connected to one another by cross members, the upper and lower surfaces are the longitudinal elements providing it a rack to which may be attached a standard camera and/or dolly mount, each articulation between adjacent support arms being provided with at least a pair of splined plates by means of which the adjacent support arms may releasably be locked in relation to one another, the relative positionings of the gear teeth and splines being such that the adjacent support arms may be locked with their support arm axes (as herein defined) co-planar.

The invention may be embodied in a variety of ways but a specific embodiment will now be described by way of example, with reference to the accompanying drawings in which:

FIGURE 1 is a side view of a support frame of the present invention mounted on a conventional dolly support;

FIGURE 2 is the support frame of Figure 1 shown in a different position;

FIGURE 3 is a perspective of a part of a frame of the type shown in Figures 1 and 2;

FIGURE 4 is an end gear piece such as may be used in a frame as shown in Figure 1;

FIGURE 5 is an expanded view of two sets of gear teeth separated from one another but showing how they will be disposed in accordance with one aspect of the invention;  and

FIGURE 6 shows an exploded section of an articulation between support members of a support frame as shown in Figure 1 showing the locking mechanism in more detail

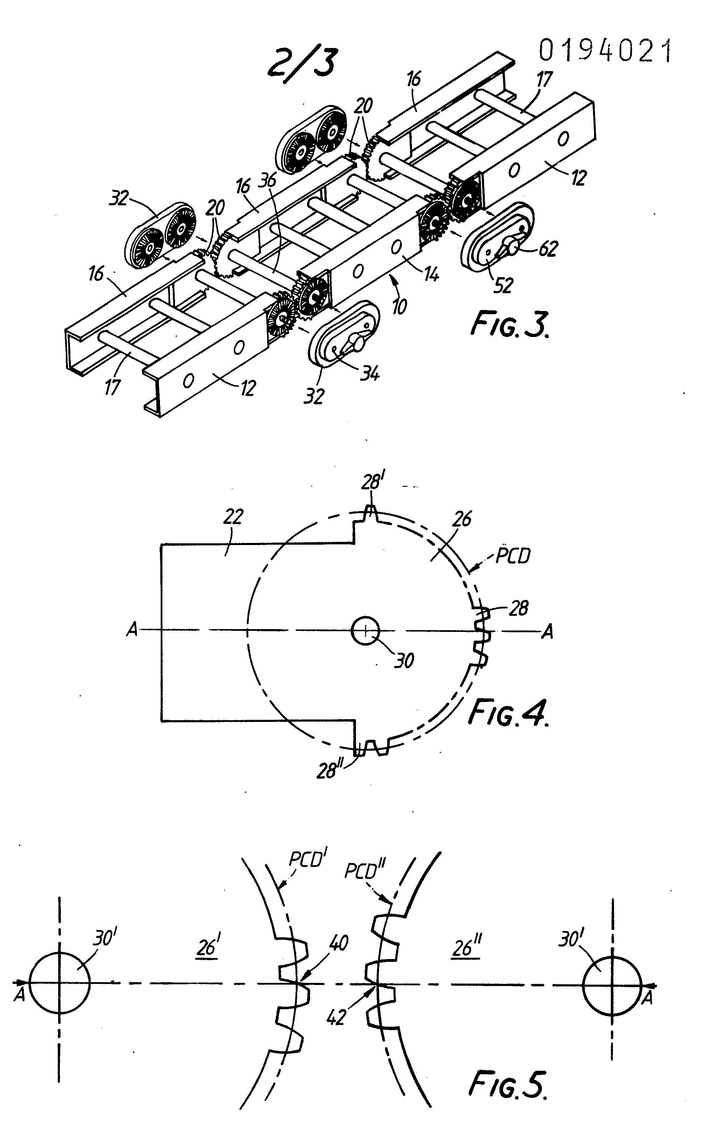

Referring to the drawings there is shown at 10 an articulated support frame comprising support arms 12 and 14.  Each arm 12 and 14 comprises a pair of rigid longitudinal channels 16 (see Figure 3) which are disposed with their open parts facing one another as shown.  The longitudinal channels 16 making up a support arm 12 or 14 are secured to one another in the disposition shown in the drawings in a rigid fashion by cross members 17.

Support arm 14 has gear teeth 20 affixed to the ends of each of its longitudinal elements 16.  The gear teeth 20 may be formed integrally on the elements 16 or in a preferred form are affixed to the elements 16 by appropriate means such as welding or bolting. Figure 4 shows a gear plate 22 which comprises a longitudinal tongue 24 and a substantially semicircular gear section 26. The gear section is provided with teeth 28 only some of which are shown in Figure 4 by way of exemplification. The teeth 28 extend fully from tooth 28' to 28'' around the periphery of the section 26. Shown at PCD on Figure 4 is the pitch circle diameter of the teeth 28 which is centred on the centre of a pivot bore 30. The tongue portion 24 in a preferred form is provided with bolt holes (not shown) by which it can be attached to the longitudinal elements 16 as shown in Figure 3.

Each of the arms 12 is provided with gear teeth 20 at one end, that end being the end adjacent to the arm 14. The gear teeth 20 are formed on the arm 12 by the same means as the gear teeth are formed on the arm 14 e.g. by use of a gear tongue arrangement 22 and shown in Figure 4.

The gear teeth 20 are meshed together in the manner shown in Figure 3 so that they are fully meshed with the longitudinal element 16 of the arms 12 and 14 substantially co-planar. With the arms and their gear teeth meshed in these positions link plates 32 are placed in position one on either side of each joint between an arm 12 and an arm 14. Each link plate has two holes 34 provided aligned with the bore holes 30 on each of the arms so that pivot bolts 36 may be passed through the link plates 32 and the arms 12 and 14 to articulate them together, the link plate providing double articulation. With that

0194021

arrangement the arms 12 and 14 may be moved angularly one in relation to another as far as permitted by the meshing of the gears 28.

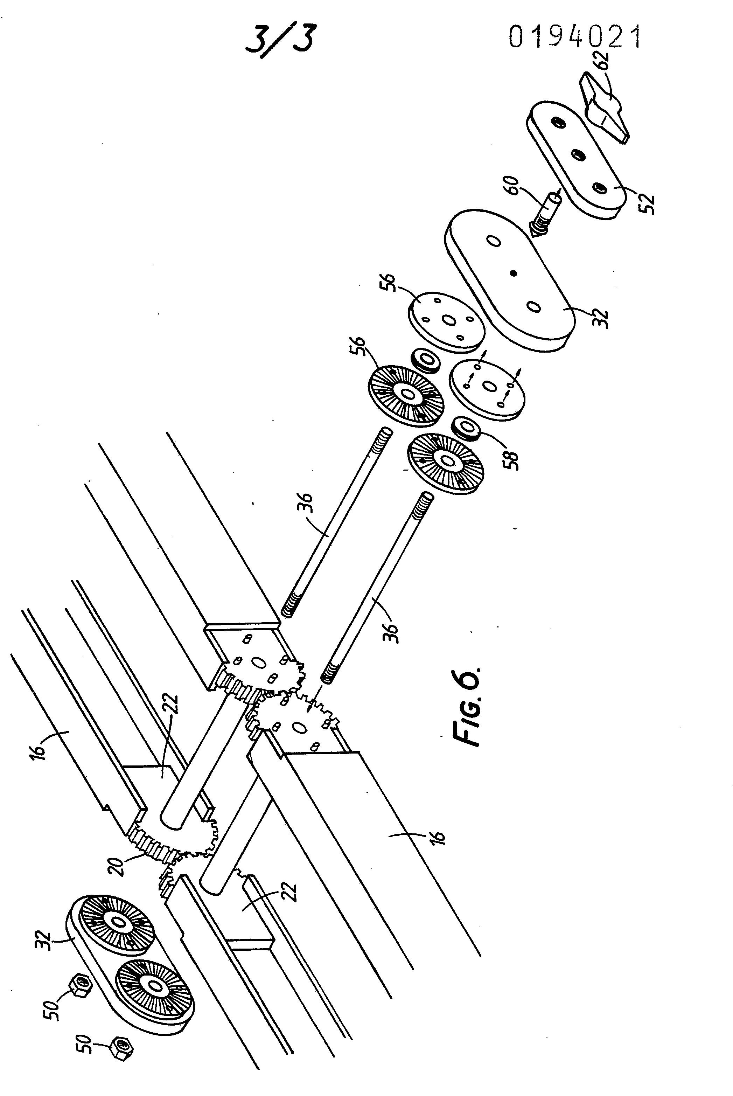

In order to lock adjacent arms in relation to one another locking means as shown in Figure 6 are provided.

As shown in Figure 6 the bolts 36 are threaded at their ends. They pass through the holes in the plates 32 and are fixed in position by bolts 50 at one side of the articulated joint and by a clamp plate 52 at the other side of the joint. As will be seen in more detail at Figure 6 there is provided between each link plate 32 and the adjacent gear plates 22 spline plates 56. As shown in Figure 6 there are four pairs of spline plates 56. The outer of each pair of spline plates 56 is affixed to a link plate 32. The inner plate 56 in each pair is likewise affixed to the gear plate 22. The affixation is such as to prevent rotational movement of each spline plate 56 in relation to the plate 22 or 32 to which it is affixed. Between each pair of spline plates 56 is a flat compression spring 58.

Between the link plate 32 and the clamp plate 52 is provided a clamp bolt 60 threaded to a wing nut 62. The joint is set up such that the rest position of the flat springs 58 holds the splined faces of each pair of splined plates apart. In that condition the adjacent arms 12/14 can be pivoted one in relation to another about the gears 20. If the wing nut 62 is rotated in the appropriate direction the bolt 60 will cause both link plates 32 of the joint to approach one another thereby doing likewise to the spline plates 56 and compressing the flat springs 58 to the point where the splined faces of each pair of spline plates 56 engage one another. In this configuration the joint is effectively locked. The spline plates of each pair are locked to one another thereby locking adjacent gears 20 individually to their adjacent link plate 32 and thereby to each other. Rotation of the wing nut 62 in the reverse direction will release the arrangement such that the flat springs 58 may force the spline plates and consequently the link plates 32 apart thereby allowing the support arms 12/14 to be moved again in relation to one another.

The components of the embodiments shown in Figure 6 are arranged such that only one hand is needed to unlock the support arms one from another leaving an operator's hand free to effect displacement of the arms with respect to one another, assuming he is able to take the weight. The action is achieved by subjecting the rods 36 to considerable tension which in turn provides the pressure required to engage securely splined faces in each pair of splined plates 56 at four locations at each hinge point or joint.

In a simpler form of the invention (not shown) individual wing nuts or the equivalent could be provided for each hinge point.

The splines on each spline plate 56 of course require to be compatible with one another. They are preferably radial disposed regularly about the 360° of the plate. The preferred spacing between the splines is $7\frac{1}{2}°$ which permits easy angular displacement of 15° betweenthe support arms 12/14.

Referring again to Figure 4 there will be seen a line A passing through the bore 30. With a tongue section 24 on each end of a support arm such as 14 the line A-A as shown on Figure 4 will extend through the bore 30 on the tongue plate 24 at the other end of the arm 14, the line A-A then being referred to as the "support arm axis". If the support frame 10 is to be arranged with its arms 12 and 14 substantially co-planar the gearing 28 must be arranged such that the support arm axes are co-extensive. In this preferred embodiment of the invention the support arm axis A-A intersects the gear pitch circle PCD at a point of substantial symmetry on a tooth flank, the gearing arrangement on the adjacent arm having a substantially identical arrangement save, as will be seen in Figure 5, that the gear arrangements are inverted. Figure 5 shows two gear arrangements 26' and 26'' which are shown separated from one another but having a common line A-A along which they can be closed to the meshed arrangement they will take to form the support arm 10 as shown in Figure 3. Looking at the gear arrangement 26' it will be seen that the line A-A intersects the pitch circle diameter PCD' at a point 40 on a tooth flank. The shape of the tooth flank respectively to the left and right of that point 40 as seen in Figure 5 will be substantially symmetrical. The same arrangement applies for gearing 26'' with the point of intersection/symmetry being 42, the gears 26' and 26'' being in effect inverted in relation to one another so that when closed up together along the line A-A they will mesh fully with their points 40 and 42 touching. With the gearing arranged in this manner it will be seen that substantially identical gearing may be used but the support arms assembled such that the arms can reliably be returned to a co-planar state following articulation about the various points 30.

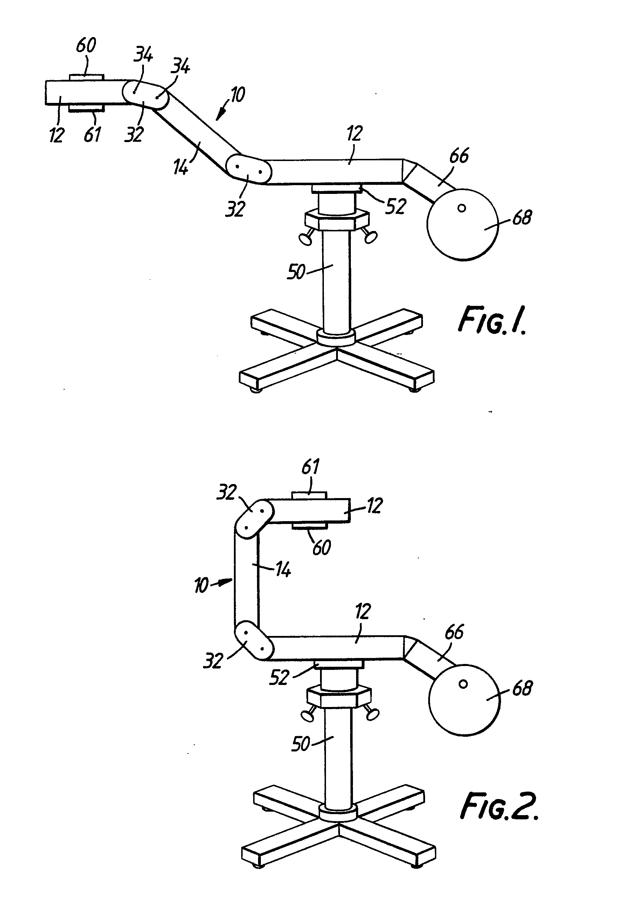

Turning now to Figures 1 and 2 the support frame 10 is in each case shown mounted on a conventional camera support dolly 50, one of the support arms 12 being affixed to the head 52 of the dolly 50 by conventional means. In Figure 1 the arm 14 is shown disposed at an angle to the horizontal arm 12 affixed to the dolly, the other arm 12 likewise being at an angle to the arm 14 such that the two arms 12 are parallel but displaced from one another. The arm 12 not affixed to the dolly is provided with two camera support pads 60 and 61 on to which a cinematographic camera may be affixed in the conventional manner.

By utilising the articulation provided by the gearing 20/link plate 32 arrangement a substantial degree of freedom of movement of positionning of the camera pad 60 and 61 may be effected. Figure 2 shows another position of the arms 12 and 14 in relation to one another. It will be seen in that instance that if the camera is fixed to pad 61, when the support frame is returned to the position of Figure 1 the camera will be inverted.

With the particular gearing arrangement described above in relation to Figure 5 it will be seen that the entire frame 10 may be returned easily, quickly and reproduceably to a horizontal disposition.

A preferred form of the framework arrangement is arranged such that a standard camera support mount may be located between the elements 16 of each arm using the elements 16 as the track along which the camera support may slide.  Alternatively further track means may be affixed to the elements 16 for that purpose. The same considerations apply for fitting the frame arrangements 10 to the head 52 of the camera support dolly.

The resources shown on Figures 1 and 2 a counter weight 68 and support therefor 66 which may be affixed to the free end of the adjacent arm 12 by any appropriate means so that the counter-weight used may be changed easily to balance the weight and positioning of the camera and various extensions of the arm 10.

The gearing 20, the dimensions of the arms 12 and 14 and the dimensions of the link plate 32 are such that the arms 12 and 14 may be folded back on to one another such that the support arm axes A to A of each of the support arms 12 and 14 are substantially parallel to one another but displaced the distance between the bores 34 of the link plates 32.  This is intended primarily for ease of transport.

CLAIMS

1. A support frame comprising support arms articulated to one another by an intermediate member and racked to one another by meshed gear teeth, each arm having gear teeth disposed such that they mesh with the teeth on an adjacent arm with the support arm axes (as herein defined) of the adjacent arms coplanar.

2. A support frame comprising support arms articulated to one another by an intermediate member and racked to one another by meshed gear teeth, each arm having gear teeth disposed such that its support arm axis (as herein defined) intersects the gear pitch circle diameter at a point of substantial symmetry of a gear tooth flank.

3. A support frame as claimed in Claim 1 and Claim 2.

4. A support frame comprising support arms articulated to one another by an intermediate member and racked to one another by meshed gear teeth, splined locking plates being disposed between at least one of the support arms and the said intermediate member, and means being provided releasably to lock said support arm and said intermediate member to one another by means of engagement of the splined plates.

5. A support frame as claimed in Claim 4 and further as claimed in any of Claims 1 to 3.

6. A support frame as claimed in any of the preceding claims in which each support arm comprises two substantially parallel support elements, the support elements of adjacent arms being aligned end to end, each support element having gear teeth at at least one end thereof meshing with like gear teeth on the adjacent arm.

7. A support frame as claimed in any of the preceding claims in which a splined plate is fixed to rotate with a support arm about the gear/pivot axis thereof and a further splined plate is fixed to rotate with an adjacent intermediate member about the gear/pivot axis thereof, means being provided to bring the spline plates together to lock the arm with respect to the adjacent intermediate member.

8. A support frame as claimed in Claim 7 in which the splines of the plate are positioned to permit locking of adjacent support arms, inter alia, with the support arm axes coplanar.

9. A support frame as claimed in any of the preceding claims which is an articulated camera support, each of the support arms comprising two substantially parallel longitudinal elements rigidly connected to one another by cross members, the upper and lower surfaces of the longitudinal elements providing a rack to which may be attached a standard camera and/or dolly mount, each articulation between adjacent support arms being provided with at least a pair of splined plates by means of which the adjacent support arms may releasably be locked in relation to one another, the relative positionings of the gear teeth and splines being such that the adjacent support arms may be locked with their support arm axes (as herein defined) co-planar.

FIG.1.

FIG.2.

0194021

FIG. 3.

FIG. 4.

FIG. 5.

FIG. 6.

0194021

0194021

**European Patent Office**

**EUROPEAN SEARCH REPORT**

Application number

# DOCUMENTS CONSIDERED TO BE RELEVANT

EP 86300634.2

| Category | Citation of document with indication, where appropriate, of relevant passages | Relevant to claim | CLASSIFICATION OF THE APPLICATION (Int. Cl.4) |
|---|---|---|---|
| | EP - A1 - 0 077 609 (TOKYO SHI-BAURA DENKI KABUSHIKI) | | G 03 B 17/56 |
| X | * Page 12, line 23; fig. 2,3,8 * | 1,6 | /B 25 J 18/06 |
| A | * Fig. 1,2; claim 6 * | 2-5,9 | |
| | -- | | |
| | DE - A1 - 3 135 088 (FRAUNHOFER GESELLSCHAFT) | | |
| X | * Fig. 6,8; claim 7 * | 1,6 | |
| Y | * Fig. 6,8; claim 7 * | 4,7 | |
| A | * Fig. 6,8; claim 7 * | 2,3,5 | |
| | -- | | |
| | DE - C - 320 261 (OTTO) | | |
| Y | * Fig. 1,8; page 1, line 42 * | 1,6 | |
| A | * Fig. 1,8; page 1, line 42 * | 2-5,7,9 | |
| | -- | | **TECHNICAL FIELDS SEARCHED (Int. Cl.4)** |
| | US - A - 856 610 (STEINDORF) | | G 03 B 17/00 |
| Y | * Fig. 1,3; page 1 * | 1,6 | F 16 M 11/00 |
| A | * Fig. 1,3; page 1, lines 63-70 * | 1-5 | B 25 J 17/00 |
| | -- | | B 25 J 18/00 |
| | FR - A - 335 658 (HUGHES) | | |
| Y | * Fig. 1-4 * | 4,7 | |
| A | * Fig. 1-4 * | 1-3,5,6,8,9 | |
| | -- | | |
| | US - A - 497 042 (WOOD) | | |
| A | * Fig. 1-3; page 1, lines 50-57 * | 1-5,7-9 | |
| | ---- | | |

The present search report has been drawn up for all claims

| Place of search | Date of completion of the search | Examiner |
|---|---|---|
| VIENNA | 30-05-1986 | KRAL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82